# EUROPEAN PATENT APPLICATION

(11) **EP 4 723 731 A1**
(43) Date of publication of application: **08.04.2026**
(21) Application number: 24811052.0
(22) Date of filing: 17.05.2024
(51) Int. Cl.: H04W 36/00, H04W 88/08

(54) **WIRELESS BASE STATION AND WIRELESS COMMUNICATION METHOD**

(30) Priority: 24.05.2023 JP 2023085630
(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2024/018303
(87) International publication number: WO 2024/242045

(57) **Abstract**

A second device that is a handover destination candidate of a terminal transmits a timing adjustment value of transmission by the terminal to a first device in a case where mobility control by a lower layer is set. The first device receives the timing adjustment value. The second device that is a handover destination candidate of the terminal transmits a plurality of timing adjustment values associated with a state of transmission configuration indication, a control resource set, or a group of the timing adjustment values.

## Description

### Technical Field

The present disclosure relates to a radio base station and a radio communication method that support L1/L2 mobility.

### Background Art

3rd Generation Partnership Project (3GPP: registered trademark) is developing specifications for 5th generation mobile communication systems (5G, also referred to as new radio (NR) or next generation (NG)), and is also developing specifications for next generation communication systems referred to as Beyond 5G, 5G Evolution, or 6G.

For example, in 3GPP Release 18, extension of layer 1/layer 2 mobility (L1/L2 mobility) is discussed. The L1/L2 mobility is also referred to as lower layer triggered mobility (LTM), corresponds to a technique related to mobility of a terminal (user equipment, UE) in a layer 1 or a layer 2, and includes transition (handover (HO)) of the UE to another cell or the like (Non Patent Literature 1). The HO by the L1/L2 mobility is realized by a lower layer such as a media access control layer (MAC).

The L1/L2 mobility is also scheduled to be supported between a central unit (CU) and a distributed unit (DU) of a radio base station (gNB), and it is also considered that the UE performs handover without performing a random access procedure (RA procedure) (which may be referred to as RACH-less handover) (Non Patent Literature 1).

Further, in 3GPP Release-18, in a case where a configuration using a plurality of transmission/reception points (TRPs) is adopted, use of two timing advances (TAs) has also been studied (Non Patent Literature 2).

### Citation List

### Non-Patent Literature

Non-Patent Literature 1: "Revised WID on Further NR mobility enhancements", RP-223520, 3GPP TSG RAN Meeting #98-e, 3GPP, December 2022
Non-Patent Literature 2: "WID Update: MIMO Evolution for Downlink and Uplink", RP-223276, 3GPP TSG RAN Meeting #98-e, 3GPP, December 2022

### Summary of Invention

In the L1/L2 mobility (LTM), in a case where a configuration using a plurality of TRPs is adopted and there are a plurality of candidate cells each of which is a handover destination, when RACH-less handover is to be executed, there is a possibility that correspondence between the plurality of TAs and the TRPs cannot be determined among the CU, the DU, and the UE. As a result, there is a concern that normal RACH-less handover cannot be executed.

Therefore, the following disclosure has been made in view of such a situation, and an object of the disclosure is to provide a radio base station and a radio communication method capable of executing normal RACH-less handover of the UE even in a case where a configuration using a plurality of TRPs is adopted or a plurality of TAs are used in the L1/L2 mobility (LTM).

According to an aspect of the present disclosure, there is provided a radio base station (gNB 100) including: a first device (gNB-CU); and one or a plurality of second devices (gNB-DU) connected to the first device, wherein the second device that is a handover destination candidate of a terminal includes a transmitting unit (F1 processing unit 170) that transmits a timing adjustment value of transmission by the terminal to the first device in a case where mobility control by a lower layer is set, the first device includes a receiving unit (F1 processing unit 130) that receives the timing adjustment value, and the transmitting unit transmits a plurality of timing adjustment values associated with a state of transmission configuration indication, a control resource set, or a group of the timing adjustment values.

### Brief Description of Drawings

[Fig. 1] Fig. 1 is an overall schematic configuration diagram of a radio communication system 10.
[Fig. 2] Fig. 2 is a functional block configuration diagram of a gNB 100 (CU).
[Fig. 3] Fig. 3 is a functional block configuration diagram of a gNB 100 (DU).
[Fig. 4] Fig. 4 is a diagram illustrating an example of a RACH-less LTM procedure according to an operation example.
[Fig. 5] Fig. 5 is a diagram illustrating an example of a hardware configuration of a gNB 100.
[Fig. 6] Fig. 6 is a diagram illustrating a configuration example of a vehicle 2001.

### Description of Embodiments

Hereinafter, embodiments will be described with reference to the drawings. Note that the same functions and configurations are denoted by the same or similar reference numerals, and a description of the functions and configurations will be appropriately omitted.

### (1) Overall Schematic Configuration of Radio Communication System

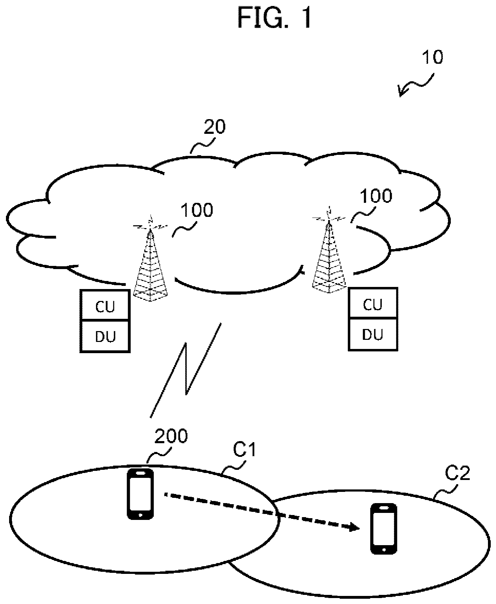

Fig. 1 is an overall schematic configuration diagram of a radio communication system 10 according to the present embodiment. The radio communication system 10 is a radio communication system according to 5G new radio (NR), and includes a next generation-radio access network 20 (hereinafter, NG-RAN 20, and a terminal 200 (user equipment 200, hereinafter, UE 200).

Note that the radio communication system 10 may be a radio communication system according to a scheme referred to as Beyond 5G, 5G Evolution, or 6G, or may include a radio communication system according to a scheme referred to as Long Term Evolution (LTE) or 4G. The radio communication system 10 may support functions related to Industrial Internet of Things (IIoT) and Ultra-Reliable and Low Latency Communications (URLLC).

The NG-RAN 20 includes a radio base station 100 (hereinafter, gNB 100). Note that the specific configuration of the radio communication system 10 including numbers of gNBs (which may be eNBs or the like) and UEs is not limited to the example illustrated in Fig. 1.

Further, the gNB 100 may adopt a fronthaul (FH) interface defined by an open radio access network alliance (O-RAN). The gNB 100 may include an O-RAN distributed unit (O-DU) and an O-RAN radio unit (O-RU). The gNB 100 can function as a type of NG-RAN node.

The NG-RAN 20 actually includes a plurality of NG-RAN nodes, specifically, gNBs (or ng-eNBs), and is connected to a core network (5GC, not illustrated) according to 5G. In the 5GC, a concept of control and user plane separation (CUPS) in which functions of a user plane and functions of a control plane are clearly separated may be introduced.

An access and mobility management function (AMF) for providing a management function of access and mobility of the UE 200, a session management function (SMF) for providing a management function of a session, and the like, which are included in the 5G system architecture, are connected to the NG-RAN 20. In addition, unified data management/user data repository (UDM/UDR) may be connected to the AMF and/or the SMF. Note that the NG-RAN 20 and the 5GC may be simply expressed as a "network".

The gNB 100 is a radio base station according to the NR, and executes radio communication according to the NR with the UE 200. Note that the gNB 100 may include a central unit (CU, first device) and a distributed unit (DU, second device), and the DU may be provided at a geographically different place by being separated from the CU. One or a plurality of DUs may be connected to the CU. In addition, the gNBs (gNB-CUs) 100 may be connected by an Xn interface, and the CU and the DU may be connected by an F1 interface.

The gNB 100 and the UE 200 can support massive MIMO that generates beams with higher directivity by controlling radio signals transmitted from a plurality of antenna elements, carrier aggregation (CA) that uses a plurality of component carriers (CC) in a bundle, dual connectivity (DC) that simultaneously performs communication between the UE and each of a plurality of NG-RAN nodes, and the like.

In the present embodiment, multi-radio dual connectivity (MR-DC) in which one gNB 100 among the plurality of gNBs 100 configures a master node (MN) and the other gNB(s) 100 configure secondary node(s) (SN(s)), specifically, NR-NR dual connectivity (NR-DC) in which the gNBs configure the MN (MgNB) and the SN(s) (SgNB) may be executed. Alternatively, E-UTRA-NR dual connectivity (EN-DC) or NR-E-UTRA dual connectivity (NE-DC) may be executed.

As described above, the UE 200 supports dual connectivity for connecting the UE to the plurality of gNBs 100.

One gNB 100 may be included in a master cell group (MCG), and the other gNB(s) 100 may be included in a secondary cell group (SCG). The other gNB(s) 100 may be interpreted as SN(s) included in the SCG. The gNB 100 may be referred to as a radio base station or a network device. The MN or the SN may form a cell C1 or a cell C2.

The radio communication system 10 may support conditional handover (CHO). In the CHO, when a specific execution condition is satisfied, handover initiated by the UE 200 can be performed. In a case where the CHO cannot be applied, normal handover may be performed (which may also be referred to as CHO recovery).

Further, the radio communication system 10 may support conditional addition or change (conditional PSCell addition/change, CPAC) of a primary SCell (PSCell). The PSCell is a type of secondary cell. The PSCell means a primary SCell (secondary cell), and may be interpreted as corresponding to any SCell of a plurality of SCells.

Note that the secondary cell may be read as a secondary node (SN) or a secondary cell group (SCG). The conditional PSCell addition/change can implement efficient and fast addition or change of the secondary cell.

In the CHO/CPAC, a time during which the SN (SgNB) holds context information (which includes UE context, dedicated RACH resource, and cell-radio network temporary identifier (C-RNTI), and may be referred to as terminal information) of the UE 200 may be managed by a timer. The SN (SgNB) may discard the UE context based on an explicit indication from the MN (MgNB) or timer expiration (as defined by 3GPP TS). In addition, the gNB-DU may discard the UE context based on an explicit indication from the gNB-CU or timer expiration (depending on implementation).

In the radio communication system 10, not only mobility control (which may be referred to as L3 mobility) of the UE 200 in the layer 3 but also mobility control (which may be referred to as L1/L2 mobility or LTM) in the layer 1 and/or the layer 2 may be applied. The L3 mobility may be interpreted as mobility control in a radio resource control layer (RRC). On the other hand, the L1/L2 mobility may be interpreted as mobility control in a physical layer (PHY), a medium access control layer (MAC), a radio link control layer (RLC), and a packet data convergence protocol layer (PDCP).

In addition, the L1/L2 mobility is supported between the central unit (CU) and the distributed unit (DU) of the radio base station (gNB), and may include subsequent LTM that can continuously execute cell switching without performing initiation of information related to candidate cells. Even in this case, the L1/L2 mobility and the L3 mobility may coexist, and processing based on each of the L1/L2 mobility and the L3 mobility may be executed in parallel.

The mobility of the UE 200 may mean ease of movement and movability of the UE 200 in a broad sense, but in the present embodiment, may mean minimizing a call drop, a failure in a radio link (including beams), unnecessary handover, a ping-pong state, and the like.

In addition, in the L1/L2 mobility (LTM), RACH-less handover in which the UE 200 executes handover without executing a random access procedure (RA procedure) may be supported. The execution of the RA procedure may be read as transmission of a random access channel (PRACH: physical random access channel) or Msg1 (which may be a random access preamble).

### (2) Functional Block Configuration of Radio Communication System

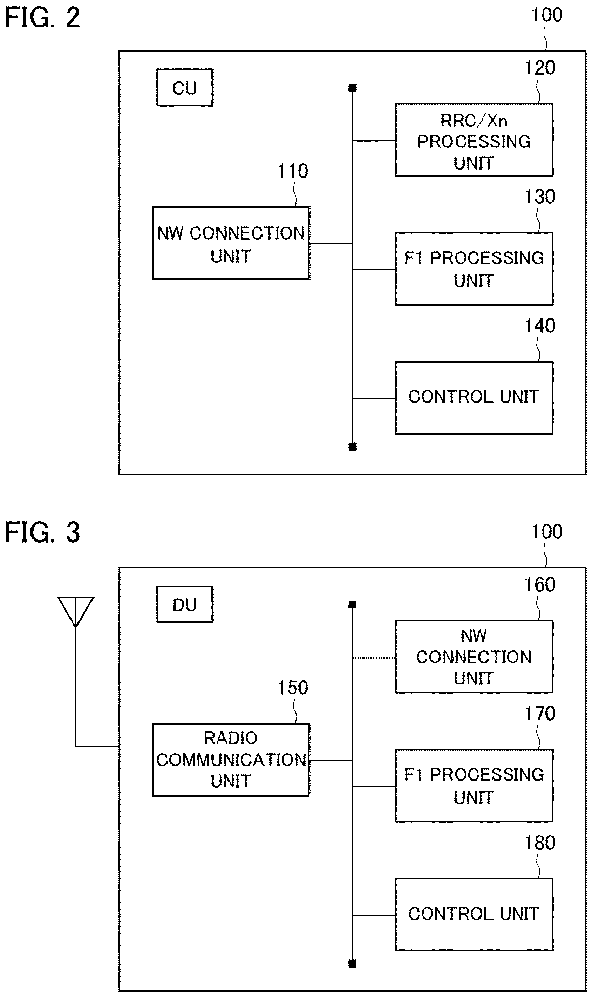

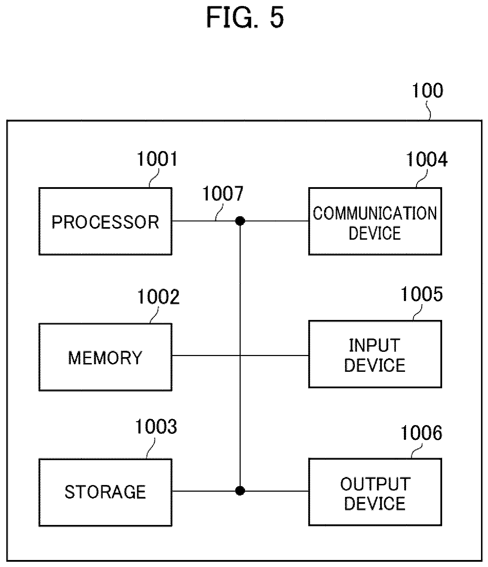

Next, a functional block configuration of the radio communication system 10 will be described. Specifically, functional block configurations of the CU and the DU of the gNB 100 will be described. Fig. 2 is a functional block configuration diagram of the gNB 100 (CU). Fig. 3 is a functional block configuration diagram of the gNB 100 (DU). Note that Fig. 2 and Fig. 3 are examples of main functional blocks related to the description of the embodiment, and the gNB 100 may include other functional blocks. In addition, Fig. 2 and Fig. 3 illustrate functional block configurations of the gNB 100 and the UE 200, and refer to Fig. 5 for a hardware configuration.

### (2.1) CU

The gNB 100 (CU) includes an NW connection unit 110, an RRC/Xn processing unit 120, an F1 processing unit 130, and a control unit 140.

The NW connection unit 110 provides an interface required for connection with other RAN nodes and core network nodes included in the network. In particular, in the present embodiment, the NW connection unit 110 can provide a connection interface (Xn) with another gNB 100 via the NG-RAN 20 and a connection interface (F1) with the DU.

The RRC/Xn processing unit 120 executes various types of processing (XnAP) related to the radio resource control layer (RRC) and the Xn interface. For example, the RRC/Xn processing unit 120 can transmit RRC Reconfiguration to the UE 200. In addition, the RRC/Xn processing unit 120 can receive, from the UE 200, RRC Reconfiguration Complete which is a response to the RRC Reconfiguration.

The RRC/Xn processing unit 120 can transmit and receive inter-node messages via the Xn interface. For example, in a case where the gNB 100 configures an MN, the RRC/Xn processing unit 120 may transmit and receive a message related to a change of the SN to and from the SN. Further, in a case where the gNB 100 configures an SN, the RRC/Xn processing unit 120 may transmit and receive a message related to a change of the SN to and from the MN in the same manner. The message may include a message related to the L1/L2 mobility (may include subsequent LTM, the same is applied to the following description).

In a case where mobility control by a lower layer, specifically, the L1/L2 mobility is set, the RRC/Xn processing unit 120 can receive, from another radio base station, for example, the gNB 100 on a source side, a message including a report or a proposal, which is for retaining candidate cells related to at least one of switching of cells (the cell C1, the cell C2, and the like) or handover by an upper layer, specifically, L3 mobility.

Specifically, the RRC/Xn processing unit 120 can process the following inter-node message (example) defined in 3GPP TS38.423. The inter-node message may include the above-described indication and the like. Note that the content of the message will be described later.
· Handover Request
· Handover Request Acknowledge
· Handover Preparation Failure
· Handover Cancel

The F1 processing unit 130 executes various types of processing (FLAP) related to the F1 interface used for connection between the CU and the DU. Specifically, the F1 processing unit 130 can transmit and receive a message between the CU and the DU via the F1 interface. The message may include a message related to the L1/L2 mobility (which may include subsequent LTM).

More specifically, the F1 processing unit 130 can process the following message defined in 3GPP TS38.473. The message may include the above-described indication and the like.
· UE Context Setup/Modification/Release Request (CU to DU
· UE Context Setup/Modification/Release Response (DU to CU)
· UE Context Modification/Release Required (DU to CU)
· UE Context Modification/Release Request/Command (CU to DU)

The F1 processing unit 130 may receive a timing adjustment value of the transmission by the UE 200 from the gNB-DU. In the present embodiment, the RRC/Xn processing unit 120 may configure a receiving unit.

Specifically, the F1 processing unit 130 may receive a value of timing advance (TA) for adjusting an uplink (UL) transmission timing of the UE 200 from the gNB-DU. The TA value may be one, but in the present embodiment, may be two or more. The gNB-DU may be a gNB-DU (candidate DU) that forms a candidate cell which is a handover destination of the UE 200.

Further, the F1 processing unit 130 may transmit a plurality of timing adjustment values received from the candidate DU to the gNB-DU (source gNB-DU) that is a handover source of the UE 200. In the present embodiment, the F1 processing unit 130 may configure a transmitting unit that transmits the timing adjustment value.

The control unit 140 controls each functional block included in the gNB 100 (CU). In particular, in the present embodiment, the control unit 140 can execute processing based on the F1AP message defined in 3GPP TS38.473 and processing based on the XnAP message defined in 3GPP TS38.423.

Note that, in the present embodiment, the channel may include a control channel and a data channel. The control channel includes a physical downlink control channel (PDCCH), a physical uplink control channel (PUCCH), a physical random access channel (PRACH), a physical broadcast channel (PBCH), and the like.

In addition, the data channel includes a physical downlink shared channel (PDSCH), a physical uplink shared channel (PUSCH), and the like.

Note that a reference signal includes a demodulation reference signal (DMRS), a sounding reference signal (SRS), a phase tracking reference signal (PTRS), a channel state information-reference signal (CSI-RS), and the like, and a signal includes a channel and a reference signal. In addition, the data may mean data transmitted via the data channel.

### (2.2) DU

The gNB 100 (DU) includes a radio communication unit 150, an NW connection unit 160, an F1 processing unit 170, and a control unit 180.

The radio communication unit 150 transmits and receives a radio signal according to the NR. Specifically, the radio communication unit 150 receives an uplink signal (UL signal) according to the NR from the UE 200, and transmits a downlink signal (DL signal) according to the NR to the UE 200.

In particular, in a case where the gNB-DU is a gNB-DU (source DU) that is a handover source of the UE 200, the radio communication unit 150 may transmit the plurality of timing adjustment values (TA values) received from the gNB-CU to the UE 200.

In the present embodiment, the radio communication unit 150 may configure a transmitting unit that transmits the timing adjustment value to the UE 200.

The NW connection unit 160 can provide a connection interface (F1) with other RAN nodes included in the network, in the present embodiment, the gNB 100 (CU).

Similarly to the F1 processing unit 130 of the CU, the F1 processing unit 170 executes various types of processing (F1AP) related to the F1 interface used for connection between the CU and the DU. Specifically, the F1 processing unit 130 can transmit and receive a message between the CU and the DU via the F1 interface.

As described above, the F1 processing unit 170 can process a message defined in 3GPP TS38.473. The message may include the above-described indication and the like.

Further, in a case where the gNB-DU is a gNB-DU (candidate DU) that is a handover destination candidate of the UE 200, the F1 processing unit 170 may transmit the timing adjustment value (TA value) of transmission by the UE 200 to the gNB-CU in a case where the L1/L2 mobility is set. In the present embodiment, the F1 processing unit 170 may configure a transmitting unit that transmits the timing adjustment value to the gNB-CU.

Specifically, the F1 processing unit 170 may transmit a plurality of TA values associated with a state of transmission configuration indication (TCI), the control resource sets (CORESET), or a timing adjustment value (TA value) group (TAG).

A plurality of TA values may be associated as described above, and the TCI associated with the TA value may be interpreted as a TCI state. The TCI state may mean that a configuration is explicitly indicated by a radio resource control layer (RRC) or a control element (MAC CE) of a media access control layer (MAC). A QCL relationship may include both of a case where the TCI state is explicitly configured and a case where the TCI state is not configured. QCL/TCI state/beam may be replaced with each other.

The TCI state can provide information of an antenna port that is quasi-colocated with an antenna port of the PDCCH. In a case where the UE has a specific CORESET that is spatially colocated with a specific CSI-RS, the UE can determine which beam is appropriate when the UE attempts to receive the PDCCH with the CORESET.

The CORESET associated with the TA value may be interpreted as an information element coresetPoolIndex (refer to 3GPP TS 38.331) indicating an index of a pool of the CORESET. Further, the TAG associated with the TA value may be interpreted as an ID for identifying the TAG.

The control unit 180 controls each functional block included in the gNB 100 (DU). In particular, in the present embodiment, the control unit 180 can execute control related to the L1/L2 mobility and the L3 mobility, based on the indication included in the F1AP message defined in 3GPP TS38.473.

### (3) Operation of Radio Communication System

Next, an operation of the radio communication system 10 will be described. Specifically, an operation related to the L1/L2 mobility (LTM) by the gNB-CU, the gNB-DU, and the UE 200, particularly, an operation when RACH-less handover is executed will be described.

### (3.1) Premise and Problem

As described above, in the L1/L2 mobility (LTM), RACH-less handover in which the UE 200 executes handover without executing a random access procedure (RA procedure) may be supported.

In the case of RACH-less handover, the UE 200 needs to acquire the TA value to be applied to a handover destination cell (a target cell included in the candidate cells) in advance. The following two methods are assumed for acquiring the TA value.
(i) The UE receives a random access response (RAR) including the TA value from a source cell.
(ii) The UE receives an LTM cell switch command including the TA value.

In addition, in a case where a configuration using a plurality of TRPs is applied for multiple-input multiple-output (MIMO), it is assumed that two TA values are used for UL multi-downlink control information (DCI).

As described above, in a case where, in the L1/L2 mobility (LTM), there are two or more candidate cells or the gNB and/or the UE adopts a configuration using a plurality of TRPs, there is a possibility that correspondence between the plurality of TAs and the TRPs cannot be determined when RACH-less handover (which may be referred to as RACH-less LTM) is executed.

In the following operation example, the above-described problem can be solved by transmitting and receiving information related to the plurality of TA values to and from the gNB-CU, the gNB-DU, and the UE 200.

### (3.2) Operation Example

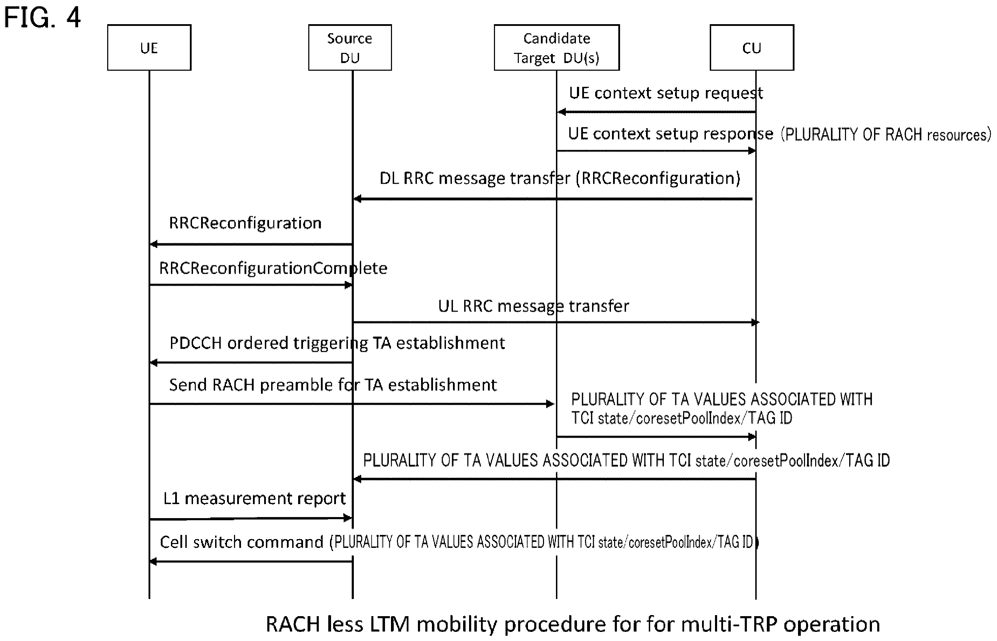

Fig. 4 illustrates an example of a RACH-less LTM procedure according to an operation example. As illustrated in Fig. 4, the candidate DU may transmit the plurality of TA values associated with the TCI state, the coresetPoolIndex, or the TAG ID to the gNB-CU (hereinafter, CU) via the F1 interface.

Note that the plurality of TA values may be associated with different TCI states (or coresetPoolIndex, TAG ID). Further, for example, any TA value may be associated with the TCI state, and another TA value may be associated with the coresetPoolIndex or the like.

In addition, the CU may transmit the plurality of TA values associated with the TCI state, the coresetPoolIndex, or the TAG ID received from the candidate DU, to the source DU via the F1 interface.

The message for transmitting the TA values is not particularly limited as long as the message is an F1-AP message.

In addition, the source DU may include the plurality of TA values associated with the TCI state, the coresetPoolIndex, or the TAG ID in the cell switch command, and transmit the cell switch command to the UE 200.

Alternatively, the source DU may transmit the plurality of TA values associated with the TCI state, the coresetPoolIndex, or the TAG ID to the UE 200 by a random access response (RAR) message (Msg. 2). Here, the message in the RA procedure used to transmit the TA values is not necessarily limited to the RAR.

### (4) Operational Effects

According to the above-described embodiment, the following operational effects can be obtained. Specifically, the candidate DU may transmit the plurality of TA values associated with the TCI state, the coresetPoolIndex, or the TAG ID to the CU. Therefore, the CU, the DU, and the UE 200 can reliably determine the correspondence between the plurality of TAs and the TRPs. Therefore, even in a case where, in the L1/L2 mobility (LTM), a configuration using a plurality of TRPs is adopted or a plurality of TAs are used, normal RACH-less handover of the UE can be executed.

In the present embodiment, the CU can transmit, to the source DU, the plurality of TA values associated with the TCI state, the coresetPoolIndex, or the TAG ID received from the candidate DU. Therefore, the source DU can also reliably determine correspondence between the plurality of TAs and the TRPs.

In the present embodiment, the source DU can transmit the plurality of TA values associated with the TCI state, the coresetPoolIndex, or the TAG ID to the UE 200. Therefore, the UE 200 can also reliably determine correspondence between the plurality of TAs and the TRPs.

### (5) Other Embodiments

Although the content of the present proposal has been described above with reference to examples, the present proposal is not limited to these descriptions, and it is obvious to those skilled in the art that various modifications and improvements can be made.

For example, in the above-described embodiment, the CU (gNB-CU) is referred to as a first device, and the DU (gNB-DU) is referred to as a second device. On the other hand, the CU may be referred to as a central device or the like, and the DU may be referred to as a distributed device or the like. In addition, the terms of L1/L2 mobility and L3 mobility have been used, but the terms may be referred to as lower (layer) mobility control, upper (layer) mobility control, and the like.

Further, in the above-described embodiment, RACH-less handover (RACH less LTM) has been described, but the above-described operation example is not necessarily limited to RACH-less handover, and may be widely applied in a case where L1/L2 mobility (LTM) is applied.

In the above description, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-individual may be read interchangeably. Similarly, common, shared, group-common, UE-common, and UE-shared may be read interchangeably.

In this disclosure, "precoding", "precoder", "weight (precoding weight)", "Quasi-Co-Location (QCL)", "Transmission Configuration Indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", "panel", and similar terms may be used interchangeably.

Note that the block diagrams (Fig. 2 and 3) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)", a "transmitter", and the like. The method for implementing each component is not particularly limited as described above.

The gNB 100 (CU, DU) which are described above may function as a computer that executes the processes of the radio communication method of the present disclosure. Fig. 5 is a diagram to illustrating an example of a hardware structure of the gNB 100. As illustrated in Fig. 5, the gNB 100 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a unit, and so on can be interchangeably interpreted. The hardware structure of the apparatuses may be configured to include one or more of apparatuses shown in the drawings, or may be configured not to include part of apparatuses.

Each functional block of the gNB 100 (see Figs. 2 and 3) is implemented by any of hardware elements of the computer apparatus or a combination of the hardware elements.

Each function of the gNB 100 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of an optical disk such as a Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and other appropriate storage media. The storage 1003 may be referred to as "auxiliary storage apparatus". The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device", a "network controller", a "network card", a "communication module", and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the apparatuses may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB), and so on)), and other signals or combinations of these. Also, RRC signaling may be referred to as an "RRC message", and can be, for example, an RRC Connection Setup message, an RRC Connection Reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these, or combinations of these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with the base station, it is clear that various operations that are performed to communicate with the terminal can be performed by the base station, one or more network nodes (for example, MME, S-GW, and so on may be possible, but these are not limiting) other than the base station, or combinations of these. According to the above, a case is described in which there is a single network node other than the base station. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and a term required for understanding of the present specification may be replaced by a term having the same or similar meaning. For example, at least one of a channel or a symbol may be a signal (signaling). Further, a signal may be a message. Further, the Component Carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "Base Station (BS)", a "radio base station", a "fixed station", a "NodeB", an "eNB (eNodeB)", a "gNB (gNodeB)", an "access point", a "transmission point", a "reception point", a "transmission/reception point", a "cell", a "sector", a "cell group", a "carrier", a "component carrier", and so on can be used interchangeably. The base station may be referred to as the terms such as a "macro cell", a "small cell", a "femto cell", a "pico cell", and so on.

The base station can accommodate one or a plurality of (for example, three) cells (also called sectors). When the base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of the base station and a base station subsystem that provides communication services within this coverage.

In the present disclosure, the transmission of information from the base station to the terminal may be interpreted as the instruction of control or operation to the terminal based on the information by the base station.

In the present disclosure, the terms "Mobile Station (MS)", "user terminal", "User Equipment (UE)", and "terminal" may be used interchangeably.

A mobile station may be referred to as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other appropriate terms in some cases.

At least one of the base station and the mobile station may be referred to as a "transmitting apparatus", a "receiving apparatus", a "radio communication apparatus", and so on. Note that at least one of the base station and the mobile station may be a device mounted on a moving object, a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of the base station and the mobile station also includes an apparatus which does not necessarily move during communication operation. For example, at least one of the base station and the mobile station may be an Internet of Things (IoT) device such as a sensor.

Furthermore, the base station in the present disclosure may be interpreted as a user station (user terminal, the same applies hereinafter). For example, each aspect/embodiment of the present disclosure may be applied to the structure that replaces a communication between the base station and the user station with a communication between a plurality of user stations (for example, which may be referred to as "Device-to-Device (D2D)", "Vehicle-to-Everything (V2X)", and the like). In this case, the user stations may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user station in the present disclosure may be interpreted as the base station. In this case, the base station may have the functions of the user station.

A radio frame may be constituted of one or a plurality of frames in the time domain. Each of one or a plurality of frames in the time domain may be referred to as a "subframe". Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a SubCarrier Spacing (SCS), a bandwidth, a symbol length, a cyclic prefix length, a Transmission Time Interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, the base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain.

The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "SubCarrier Group (SCG)", a "Resource Element Group (REG)", a "PRB pair", an "RB pair" and so on.

Furthermore, a resource block may be constituted of one or a plurality of Resource Elements (REs). For example, one RE may correspond to a radio resource field of one subcarrier and one symbol.

A Bandwidth Part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up, search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Furthermore, "determining" may be regarded as "assuming", "expecting", "considering", and the like.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

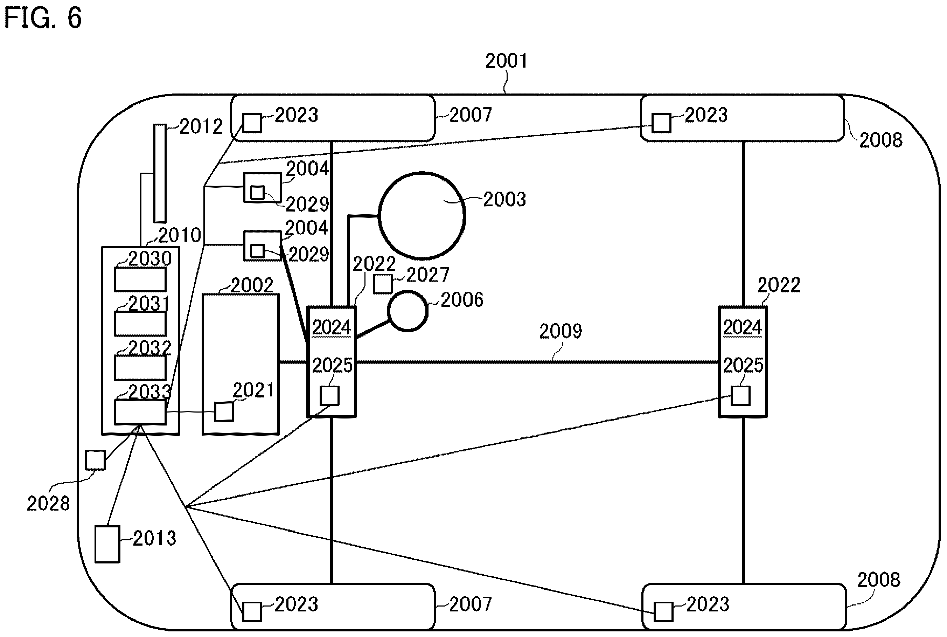

Fig. 6 illustrates an example of a configuration of a vehicle 2001. As illustrated in Fig. 6, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021 to 2027 provided in the vehicle 2001. The electronic control unit 2010 may be referred to as an ECU (Electronic control unit) .

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information service unit 2012 may include an input device that accepts an external input (e.g., keyboard, mice, microphone, switch, button sensor, touch panel, or the like), and may include an output device that performs an external output (e.g, display, speaker, LED lamp, touch panel, or the like) .

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, and an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2028 provided in the vehicle 1.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit to an external device through radio communication, at least one of signals from the above-described various sensors 2021 to 2028 which are input to the electronic control unit 2010, information obtained based on the signals, and information based on an input from external (user) which is obtained through the information service unit 2012. The electronic control unit 2010, the various sensors 2021 to 2028, the information service unit 2012 and the like may be referred to as input units which accept an input. For example, PUSCH to be transmitted by the communication module 2013 may include information based on the above-described input.

The communication module 2013 receives various types of information (traffic information, signal information, inter-vehicle information, etc.) transmitted from the external devices and displays the received information on the information service unit 2012 provided in the vehicle. The information service unit 2012 may be referred to as an output unit which outputs information (e.g., outputs information to a device such as a display, a speaker or the like based on PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2028, etc., mounted in the vehicle 2001.

As described above, the present disclosure has been described in detail. It is apparent to a person skilled in the art that the present disclosure is not limited to one or more embodiments of the present disclosure. Replacements and modifications of the present disclosure may be possible without departing from the subject matter and the scope of the present disclosure defined by the descriptions of claims. Therefore, the descriptions of the present disclosure are for illustrative purposes only, and are not intended to be limitations to the present disclosure.

### Explanation of Reference Numerals

- 10: radio communication system
- 20: NG-RAN
- 100: gNB
- 110: NW connection unit
- 120: RRC/Xn processing unit
- 130: F1 processing unit
- 140: control unit
- 150: radio communication unit
- 160: NW connection unit
- 170: F1 processing unit
- 180: control unit
- 200: UE
- 1001: processor
- 1002: memory
- 1003: storage
- 1004: communication apparatus
- 1005: input apparatus
- 1006: output apparatus
- 1007: bus
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A radio base station comprising:
a first device; and one or a plurality of second devices connected to the first device, wherein
the second device that is a handover destination candidate of a terminal includes a transmitting unit that transmits a timing adjustment value of transmission by the terminal to the first device in a case where mobility control by a lower layer is set,
the first device includes a receiving unit that receives the timing adjustment value, and
the transmitting unit transmits a plurality of timing adjustment values associated with a state of transmission configuration indication, a control resource set, or a group of the timing adjustment values.

2. The radio base station according to claim 1, wherein the first device includes a transmitting unit that transmits the plurality of received timing adjustment values to the second device that is a handover source of the terminal.

3. The radio base station according to claim 2, wherein the transmitting unit in the second device that is a handover source of the terminal transmits the received plurality of timing adjustment values to the terminal.

4. A radio communication method by a radio base station including a first device and one or a plurality of second devices connected to the first device, the method comprising:
a step of transmitting, by the second device that is a handover destination candidate of a terminal, a timing adjustment value of transmission by the terminal to the first device in a case where mobility control by a lower layer is set; and
a step of receiving, by the first device, the timing adjustment value, wherein
the transmitting step includes transmitting a plurality of timing adjustment values associated with a state of transmission configuration indication, a control resource set, or a group of the timing adjustment values.
